(19) Europäisches Patentamt
European Patent Office
Office européen des brevets

(11) **EP 4 075 663 A1**

(12) **EUROPEAN PATENT APPLICATION**

(43) Date of publication:
**19.10.2022 Bulletin 2022/42**

(21) Application number: **21168670.4**

(22) Date of filing: **15.04.2021**

(51) International Patent Classification (IPC):
**H02P 6/21** $^{(2016.01)}$ **H02P 6/182** $^{(2016.01)}$
**H02P 1/04** $^{(2006.01)}$ **H02P 1/46** $^{(2006.01)}$

(52) Cooperative Patent Classification (CPC):
**H02P 6/21; H02P 1/04; H02P 1/46; H02P 6/182**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vestel Elektronik Sanayi ve Ticaret A.S.**
**45030 Manisa (TR)**

(72) Inventor: **YILDIRIM, Seyit**
**45030 Manisa (TR)**

(74) Representative: **Kehl, Ascherl, Liebhoff & Ettmayr**
**Patentanwälte Partnerschaft mbB**
**Emil-Riedel-Straße 18**
**80538 München (DE)**

(54) **MOTOR CONTROLLER, WASHING MACHINE AND METHOD**

(57) The present disclosure provides a motor controller (100, 200) comprising a current sensor interface (101, 201) configured to receive current sensor signals (102) for a number of motor phases of an electric motor (217) that indicate the current value (107) in the respective motor phase, a control signal interface (103, 203) configured to output control signals (104) for the number of motor phases of the electric motor (217), and a controller (105) coupled to the current sensor interface (101, 201) and the control signal interface (103, 203) and configured to generate the control signals (104) and output the control signals (104) via the control signal interface (103, 203), wherein the controller (105) is configured to generate the control signals (104) based on a predefined maximum starting current (106) for a first set of control signals (104) in a group comprising a plurality of sets of control signals (104), and wherein the controller (105) is configured to generate the control signals (104) for the further sets of control signals (104) in the group based on a starting current that is determined based on the current values (107) received via the current sensor interface (101, 201) during the generation of the first set of control signals (104). The present disclosure further provides a washing machine (215) and a respective method.

101  102  106  105  104  103

Imax

Imeas

107

100

Fig. 1

**Description**

**TECHNICAL FIELD**

The disclosure relates to motor controller, a washing machine and a respective method.

**BACKGROUND**

Although applicable to any machine with an electric motor, the present disclosure will mainly be described in conjunction with washing machines.

Modern washing machines may comprise a Permanent Magnet Synchronous Motor, also called PMSM, or brushless DC electric motor, also called BLDC motor or BL motor. The control of such motors is usually sensorless.

Therefore, the starting of such a motor is usually performed with a fixed starting current.

There is a need for improving starting of electric motors in washing machines.

**SUMMARY**

The above stated problem is solved by the features of the independent claims. It is understood, that independent claims of a claim category may be formed in analogy to the dependent claims of another claim category.

Accordingly, it is provided:
A motor controller comprising a current sensor interface configured to receive current sensor signals for a number of motor phases of an electric motor that indicate the current value in the respective motor phase, a control signal interface configured to output control signals for the number of motor phases of the electric motor, and a controller coupled to the current sensor interface and the control signal interface and configured to generate the control signals and output the control signals via the control signal interface, wherein the controller is configured to generate the control signals based on a predefined maximum starting current value for a first set of control signals in a group comprising a plurality of sets of control signals, and wherein the controller is configured to generate the control signals for the further sets of control signals in the group based on a starting current that is determined based on the current values received via the current sensor interface during the generation of the first set of control signals.

Further, it is provided:
A washing machine comprising an electric motor comprising a number of motor phases, a current sensor configured to measure the currents in the motor phases, a motor driver coupled to the motor phases and configured to provide respective driving currents to each one of the motor phases, and a motor controller according to any one of the preceding claims coupled to the current sensor and the motor driver and configured to receive current sensor signals from the current sensor and to provide control signals to the motor driver.

Further, it is provided:
A method for controlling an electric motor, the method comprising generating control signals for electrical phases of the electric motor based on a predefined maximum starting current value for a first set of control signals in a group comprising a plurality of sets of control signals, sensing current values in the motor phases during the generation of the first set of control signals, and generating the control signals for further sets of control signals in the group based on a starting current that is determined based on the measured current values.

The present invention is based on the finding that especially in white goods machines like washing machines, motors are usually controlled without rotor position sensors. The motors used in such machines may be e.g., Permanent Magnet Synchronous Motors, also called PMSM, or brushless DC electric motors, also called BLDC motor or BL motor.

The rotor position information is however required for speed control. The rotor position information may in such systems be obtained with the help of an observer that uses the back-emf voltage of the motor to calculate the alpha & beta axis currents in a rotor-related coordinate system. At this point no detailed explanation of the sensorless control of electric motors is given. It is understood, that generally known control algorithms may be used.

When an electric motor is stopped, since there is no back-emf voltage and current information, the position information cannot be obtained when starting an electric motor from zero speed.

During start-up an open-loop control may be performed, similar to open-loop control of stepper motors, when starting from zero speed.

During the open-loop control, since the load e.g., inside the washing machine, is unknown, a predefined maximum starting current is used. The predefined maximum starting current may be determined by the manufacturer of the respective machine such that all allowed loads may be handled with the predefined maximum starting current. Thus, regardless of the load in the electric motor e.g., the amount of clothes inside the drum of a washing machine, the first start is performed with the predefined maximum starting current. Once the electric motor is turning, the back emf voltage and current information can be determined, and the rotor position information may be obtained. Therefore, close-loop control may then be used.

During start-up with an open-loop control, that is used when starting from zero speed, the predefined maximum starting current, that is determined in order to handle all possible loads, heats the electric motor and causes energy loss in the electric motor.

The predefined maximum starting current is used even if there is a very low load in the drum. Therefore, the motor may become unnecessarily hot due to the use of the fixed predefined maximum starting current.

During operation of a machine the electric motor may be started and stopped multiple time. For example, a washing program of a washing machine may comprise different patterns of starts and stops for the clothes to be soaked and moved accordingly. The more starts such a washing program has, the more heat is generated in the electric motor.

The motor controller according to the present disclosure, therefore, reduces the starting current applied to an electric motor during the multiple starts of the electric motor during a single operation cycle, like e.g. during a single washing program.

The motor controller uses that predefined maximum starting current for starting the electric motor only for the first start of the electric motor during an operation cycle, and uses an adapted current value during consecutive starts of the electric motor of an operation cycle.

The motor controller comprises a current sensor interface and a control signal interface that are both coupled to a controller. The current sensor interface serves for receiving current sensor signals that indicate current values for the motor phases of the electric motor. For a three-phase motor three current values may be received or two current values may be received and the third current value may be calculated. The control signal interface serves for providing control signals to motor drivers that drive the electric motor i.e., the motor phases of the electric motor, with the respective driving currents. The control signals may be any type of representation that may be used by the motor drivers. Therefor the type of the control signals may vary depending on the type of motor driver. The motor driver may for example be an H-bridge type motor driver that may be driven with PWM control signals. In another embodiment, the motor driver may be a motor driver with a digital interface and receive digital control signals.

In order to reduce the starting current for the electric motor for multiple starts of the electric motor during an operation cycle, the controller of the motor controller generates the control signals based on a predefined maximum starting current only for a first set of control signals. The term "set of control signals" refers to the control signals which are generated for one movement of the electrical motor from start to stop of the electrical motor. A group of sets may refer to multiple such movements, wherein the motor is controlled to a full stop between different sets of control signals.

For all further sets of control signals apart from the first set, the controller generates the control signals based on a starting current that is lower than the predefined maximum starting current and that is determined based on the current values received via the current sensor interface, while the electrical motor was operated with the first set of control signals. These currents depend on the load of the electric motor and therefore are low if the load on the electric motor is low.

Consequently, the start-up current for the sets of control signals after the first set may be dynamically adapted to the load of the electric motor and a lower start-up current may be used.

Especially, for operation cycles with multiple starts of the electric motor, the heat induced in the electric motor may, therefore, be reduced by using a start-up current for all but the first set of control signals that is lower than the predefined maximum starting current.

The controller may be provided as a dedicated processing element, like e.g. a processing unit, a microcontroller, an FPGA, a CPLD or the like. The controller may at least in part also be provided as a computer program product comprising computer readable instructions that may be executed by a processing element. In a further embodiment, the controller may be provided as addition or additional function or method to the firmware or operating system of a processing element that is already present in the respective application. In addition, it is understood, that any required supporting or additional hardware may be provided like e.g., a power supply circuitry and clock generation circuitry.

Further embodiments of the present disclosure are subject of the further dependent claims and of the following description, referring to the drawings.

In an embodiment, when generating the control signals, the controller may be configured to perform an open-loop control during a start-up phase of each set and to perform a closed-loop control during a running phase of each set.

The open-loop control allows starting the electric motor without a position or speed signal. As indicated above, the type of control may be similar to stepper motors or the like, where the motor phases are consecutively provided with driving current. Microstepping-like control may also be used.

After starting the electric motor i.e., when the electric motor is already turning, determination of the rotor speed and rotor position based on the back-emf voltage becomes possible and a closed-loop control may be used during the running phase.

According to the above-presented explanation, a set of control signals includes control signals for a start-up phase and a running phase. As also explained above, the running phase ends with a stop of the electric motor or at least a phase without control signals being generated.

The next run of the motor is initiated with the start-up phase of the next set of control signals.

In another embodiment, while generating the control signals for the first set of the group, the controller may be configured to generate the control signals for the start-up phase based on the predefined maximum starting current, generate the control signals for the running phase based on the current values received for the motor phases during the running phase, and determine a maximum current value of the phase currents during the running phase.

In order to determine the start-up current for all but the first set of control signals during an operation cycle of the electric motor, the controller starts the electric motor by generating control signals based on the predefined maximum starting current. Such control signals will result in phase currents in the electric motor that are as high as indicated by the predefined maximum starting current.

After starting the electric motor and switching to closed-loop control, since closed-loop control includes a feedback system, the torque applied is almost equal to the torque needed.

The control then determines the maximum phase current while the electric motor rotates at a constant speed. The maximum phase current corresponds to the current needed to rotate the electric motor, if the speed is constant:

$$T_e - T_L = J * \frac{dw}{dt} \quad (1)$$

$$\frac{dw}{dt} = 0 \; ;$$
at constant speed. Therefore, $T_e = T_L$

$T_e$ is the electrical torque, $T_L$ is the load torque, J is the inertia, and w is the angular speed.

In yet another embodiment, while generating the control signals for the further sets, the controller may be configured to generate the control signals for the start-up phase based on the determined maximum current value and a predetermined acceleration current, generate the control signals for the running phase based on the current values measured for the motor phases during the running phase.

As explained above, during the running phase of the first set of control signals the maximum current value for the phase currents of the electric motor may be determined while the motor is rotating at constant speed.

However, at start-up of the motor the term $\frac{dw}{dt}$ in the above-presented equation is not equal to 0. Therefore, the determined maximum current value will not be sufficient for starting the electric motor.

For starting the electric motor an acceleration current is therefore added to the determined maximum current value. The acceleration current may be applied as constant value. Therefore, when generating the control signals for other than the first set, the control signals may be generated based on the starting current that is the sum of the predefined maximum starting current and the acceleration current:

$$I_{starting} = I_{phase\_max} + I_{acc} \quad (2)$$

The acceleration current Iacc may also be variable. In an embodiment, the acceleration current may for example be increased if it is known that the clothes in the drum of a washing machine have been soaked with water between two consecutive sets of control signals.

In a further embodiment, the sum of the maximum current value and the predetermined acceleration current may be lower than the maximum starting current.

As explained above, the maximum starting current is determined to start the electric motor under all allowed load conditions. It is understood, that the predefined maximum starting current may not suffice to start the electric motor under not-allowed load conditions, like when the washing machine is overloaded or the drum of the washing machine is blocked.

In order to reduce the thermal impact of the starting operations of the electrical engine, the current used for starting the electrical motor after is has been started for the first time during an operation cycle e.g., a washing program, should be lower than the current for the first start.

In another embodiment, while generating the control signals for the further sets, the controller may measure the maximum current value while generating the control signals for the running phase.

If the controller constantly measures the maximum current value during the running phases for all sets of control signals, the maximum current value is adapted to changes in the load of the motor. In a washing machine, the load may for example change if the clothes in the drum are soaked with water.

After measuring the maximum current value again, the following set of control signals may be generated based on the new maximum current value.

In an embodiment, while generating the control signals for the further sets, the controller may further be configured to monitor based on the current sensor signals, if after generating the control signals for the start-up phase the electric motor is rotating, and if the electric motor is not rotating after generating the control signals for the start-up phase, restart generating the respective set of control signals and generate the control signals for the start-up phase based on the predefined maximum starting current and determine again the maximum current value of the phase currents during the running phase.

If the electric motor is not turning after the control signals for the start-up phase have been generated, the start-up current may have been too low. Therefore, the controller may re-determine the maximum current value of the phase currents during the running phase. This re-determined maximum current value may then be used for the further starting operations of the electric motor.

The control may only restart generating the control signals of the current set of control signals. Therefore, if for example during a washing program the motor is started a total of 10 times and during the 6th time the motor cannot be moved e.g., because the clothes are soaked with water and heavier than at the beginning, only the 6th set of control signals is re-generated and the following sets are generated accordingly.

It is understood, that further measures may be present in the motor controller that handle special events, like a mechanical blocking of the electric motor by accident. However, such special events are not subject to the present disclosure.

## BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:

Figure 1 shows a block diagram of an embodiment of a motor controller according to the present disclosure;

Figure 2 shows a block diagram of an embodiment of a washing machine according to the present disclosure;

Figure 3 shows a flow diagram of an embodiment of a method according to the present disclosure; and

Figure 4 shows a flow diagram of another embodiment of a method according to the present disclosure.

In the figures like reference signs denote like elements unless stated otherwise.

## DETAILED DESCRIPTION OF THE DRAWINGS

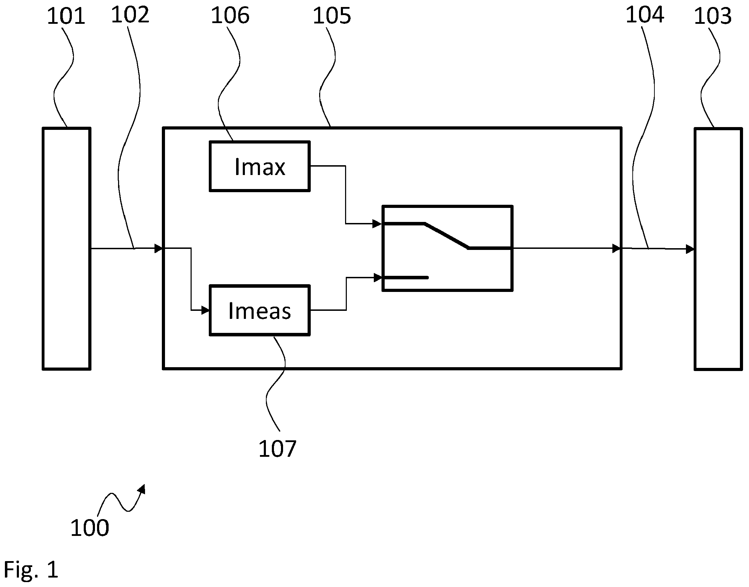

Figure 1 shows a block diagram of a motor controller 100 for generating control signals 104 for an electric motor. The motor controller 100 comprises a current sensor interface 101 and a control signal interface 103, which are both coupled to a controller 105.

The current sensor interface 101 serves to receive current sensor signals 102 for a number of motor phases of the electric motor that indicate a current value 107 in the respective motor phase. The control signal interface 103 serves for outputting control signals 104 for the motor phases of the electric motor.

The controller 105 generates the control signals 104 and output the control signals 104 via the control signal interface 103 based on different base values depending on the state of the electric motor.

The controller 105 generates the control signals 104 based on a predefined maximum starting current 106 for a first set of control signals 104 in a group comprising a plurality of sets of control signals 104. For further sets of control signals 104 in the group, the controller 105 generally generates the control signals 104 based on a starting current that is determined based on the current values 107 received via the current sensor interface 101 during the generation of the first set of control signals 104.

The group of sets of control signals may for example refer to a washing program, wherein each set of control signals refers to one run of the electric motor, of which multiple may be present in a washing program.

With a Permanent Magnet Synchronous Motor, also called PMSM, or a brushless DC electric motor, also called BLDC motor or BL motor, when generating the control signals 104, the controller 105 may perform an open-loop control during a start-up phase of each set and perform a closed-loop control during a running phase of each set.

While generating the control signals 104 for the first set of the group, the controller 105 may generate the control signals 104 for the start-up phase based on the predefined maximum starting current 106. As indicated above, the predefined maximum starting current 106 may be designed or specified for the maximum allowed load on the electric motor, and will therefore suffice to start the electric motor under any normal operating circumstances. The controller 105 may generate the control signals 104 for the running phase based on the current values 107 received for the motor phases during the running phase. The controller 105 will therefore perform a closed loop control based on the measured currents in the motor phases. In the running phase the controller 105 will further determine a maximum current value 107 of the phase currents.

The maximum current value 107 represents the current that is required to keep the motor running at the current load situation and because of the closed-loop control will represents the current load situation of the electric motor.

After determining the maximum current value 107 with the first set of control signals 104, the controller 105 when generating the control signals 104 for the further sets may generate the control signals 104 for the start-up phase based on the determined maximum current value 107 and a predetermined acceleration current. This predetermined acceleration current serves to take into account that starting an electric motor from a full stop requires more power i.e., current, than keeping a motor running.

For the running phase the controller 105 may generate the control signals 104 based on the current values 107 measured for the motor phases during the running phase i.e., in a closed-loop control. While generating the control signals 104 for the further sets, the controller 105 may also determine the maximum current value 107 again while generating the control signals 104 for the running phase.

It is understood, that to reduce the thermal load on the motor during multiple starts from a full stop, the sum of the maximum current value 107 and the predetermined acceleration current is set to be lower than the maximum starting current 106. A respective limiter for the maximum current value 107 may be provided in the motor controller 100.

A verification of a successful start of the motor is also possible. While generating the control signals 104 for the further sets, the controller 105 may monitor based on the current sensor signals 102 if after generating the control signals 104 for the start-up phase i.e., when transitioning to the closed-loop control, the electric motor 217 is rotating. If the electric motor 217 is not rotating after generating the control signals 104 for the start-up phase, the controller 105 may restart generating the respective set of control signals 104 and generate the control signals 104 for the start-up phase based on the predefined maximum starting current 106 and determine again the maximum current value 107 of the phase currents during the running phase.

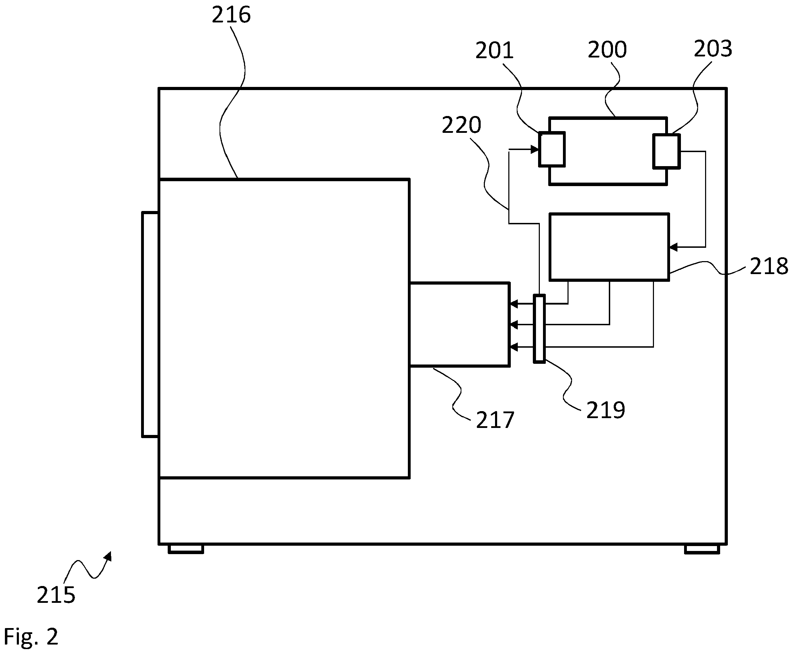

Figure 2 shows a block diagram of a washing machine 215. The washing machine 215 comprises a drum 216 coupled to an electric motor 217. In the washing machine 215 a motor controller 200 is present that comprises a current sensor interface 201 and a control signal interface 203 to interface to a current sensor 219 and a motor driver 218 of the washing machine 215.

The electric motor 217 comprises three motor phases (not separately referenced) and the current sensor 219 is arranged to measure the currents in the motor phases and to provide information about the measured currents 220 to the motor controller 200 via the current sensor interface 201.

The motor driver 218 receives control signals from the motor controller 200 and from the control signals generates the respective currents in the motor phases of the electric motor 217.

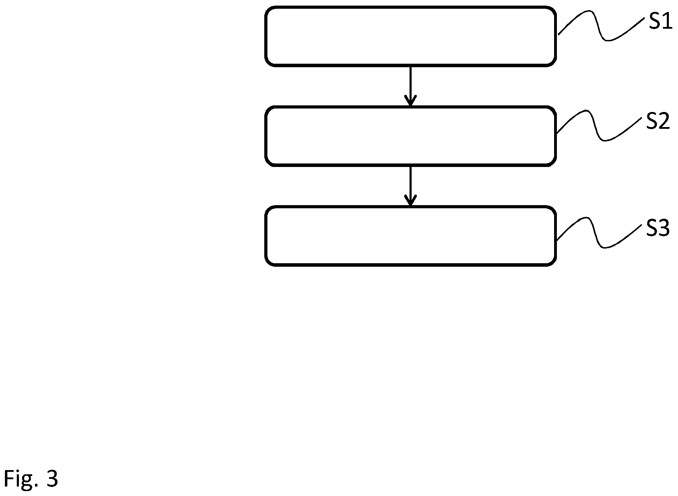

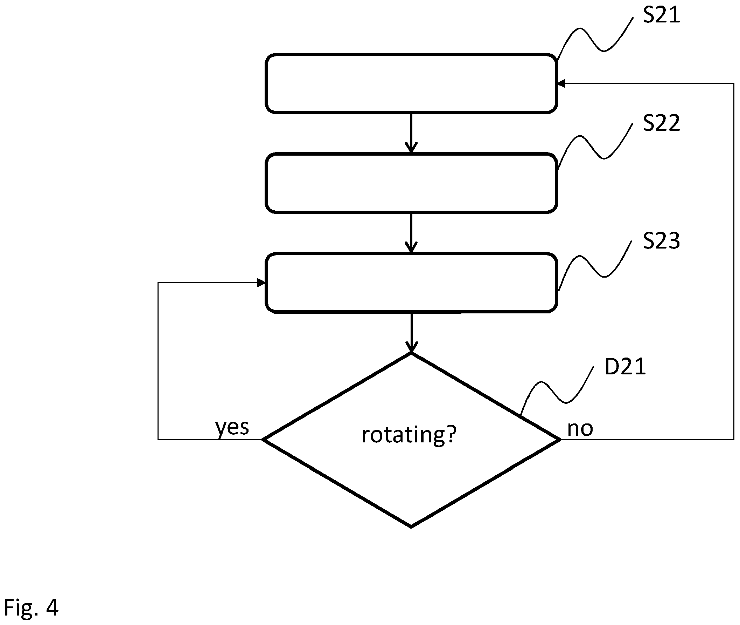

For sake of clarity in the following description of the method-based figures 3 and 4 the reference signs used above in the description of apparatus-based figures 1 and 2 will be maintained.

Figure 3 shows a flow diagram of a method for controlling an electric motor 217.

The method comprises generating S1 control signals 104 for electrical phases of the electric motor 217 based on a predefined maximum starting current 106 for a first set of control signals 104 in a group comprising a plurality of sets of control signals 104, sensing S2 current values 107 in the motor phases during the generation of the first set of control signals 104, and generating S3 the control signals 104 for further sets of control signals 104 in the group based on a starting current that is determined based on the measured current values 107.

For generating the control signals 104 an open-loop control may be performed during a start-up phase of each set and a closed-loop control may be performed during a running phase of each set.

Generating the control signals 104 for the first set of the group may comprise generating the control signals 104 for the start-up phase based on the predefined maximum starting current 106, generating the control signals 104 for the running phase based on the current values 107 received for the motor phases during the running phase, and determining a maximum current value 107 of the phase currents during the running phase.

Generating the control signals 104 for the further sets may comprise generating the control signals 104 for the start-up phase based on the determined maximum current value 107 and a predetermined acceleration current, and generating the control signals 104 for the running phase based on the current values 107 measured for the motor phases during the running phase.

It is understood, that the sum of the maximum current value 107 and the predetermined acceleration current may be lower than the maximum starting current 106.

While generating the control signals 104 for the further sets, the maximum current value 107 may be measured while generating the control signals 104 for the running phase. This new maximum current value 107 may be used for generating further sets of control signals 104.

Figure 4 shows a flow diagram of another method for controlling an electric motor 217. The method of Figure 4 is based on the method of Figure 3. Therefore, the above-explanations also apply to the method of Figure 4.

The method comprises generating S21 control signals 104 for electrical phases of the electric motor 217 based on a predefined maximum starting current 106 for a first set of control signals 104 in a group comprising a plurality of sets of control signals 104, sensing S22 current values 107 in the motor phases during the generation of the first set of control signals 104, and generating S23 the control signals 104 for further sets of control signals 104 in the group based on a starting current that is determined based on the measured current values 107.

In addition, generating the control signals 104 for the further sets comprises monitoring D21 based on the sensed current values 107, if after generating the control signals 104 for the start-up phase the electric motor 217 is rotating.

If the electric motor 217 is not rotating, "no" branch of decision D21, after generating the control signals 104 for the start-up phase, the control signals 104 for the start-up phase are generated based on the predefined maximum starting current 106. The maximum current value 107 of the phase currents is then determined again during the running phase.

If the electric motor 217 is rotating after generating the control signals 104 for the start-up phase, generation of the control signals 104 for the further sets of control signals 104 in the group is performed in step S23 based on a starting current that is determined based on the measured current values 107.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

LIST OF REFERENCE SIGNS

| | |
|---|---|
| 100, 200 | motor controller |
| 101, 201 | current sensor interface |
| 102 | current sensor signal |
| 103, 203 | control signal interface |
| 104 | control signal |
| 105 | controller |
| 106 | maximum starting current |
| 107 | current value |
| 215 | washing machine |
| 216 | drum |
| 217 | electric motor |
| 218 | motor driver |
| 219 | current sensor |
| 220 | measured current |
| S1, S2, S3, S21, S22, S23 | method steps |
| D21 | decision |

**Claims**

1. Motor controller (100, 200) comprising:

   a current sensor interface (101, 201) configured to receive current sensor signals (102) for a number of motor phases of an electric motor (217) that indicate the current value (107) in the respective motor phase;
   a control signal interface (103, 203) configured to output control signals (104) for the number of motor phases of the electric motor (217); and
   a controller (105) coupled to the current sensor interface (101, 201) and the control signal interface (103, 203) and configured to generate the control signals (104) and output the control signals (104) via the control signal interface (103, 203);

wherein the controller (105) is configured to generate the control signals (104) based on a predefined maximum starting current (106) for a first set of control signals (104) in a group comprising a plurality of sets of control signals (104); and

wherein the controller (105) is configured to generate the control signals (104) for further sets of control signals (104) in the group based on a starting current that is determined based on the current values (107) received via the current sensor interface (101, 201) during the generation of the first set of control signals (104).

2. Motor controller (100, 200) according to claim 1, wherein when generating the control signals (104), the controller (105) is configured to perform an open-loop control during a start-up phase of each set and to perform a closed-loop control during a running phase of each set.

3. Motor controller (100, 200) according to claim 2, wherein while generating the control signals (104) for the first set of the group, the controller (105) is configured to:

generate the control signals (104) for the start-up phase based on the predefined maximum starting current (106);
generate the control signals (104) for the running phase based on the current values (107) received for the motor phases during the running phase; and
determine a maximum current value (107) of the phase currents during the running phase.

4. Motor controller (100, 200) according to claim 3, wherein while generating the control signals (104) for the further sets, the controller (105) is configured to:

generate the control signals (104) for the start-up phase based on the determined maximum current value (107) and a predetermined acceleration current;
generate the control signals (104) for the running phase based on the current values (107) measured for the motor phases during the running phase.

5. Motor controller (100, 200) according to claim 4, wherein the sum of the maximum current value (107) and the predetermined acceleration current is lower than the maximum starting current (106).

6. Motor controller (100, 200) according to any one of claims 4 and 5, wherein while generating the control signals (104) for the further sets, the controller (105) is configured to measure the maximum current value (107) while generate the control signals (104) for the running phase.

7. Motor controller (100, 200) according to any one of the preceding claims 4 to 6, wherein while generating the control signals (104) for the further sets, the controller (105) is further configured to:

monitor based on the current sensor signals (102), if after generating the control signals (104) for the start-up phase the electric motor (217) is rotating; and
if the electric motor (217) is not rotating after generating the control signals (104) for the start-up phase, restart generating the respective set of control signals (104) and generate the control signals (104) for the start-up phase based on the predefined maximum starting current (106) and determine again the maximum current value (107) of the phase currents during the running phase.

8. Washing machine (215) comprising:

an electric motor (217) comprising a number of motor phases;
a current sensor (219) configured to measure the currents in the motor phases;
a motor driver (218) coupled to the motor phases and configured to provide respective driving currents to each one of the motor phases; and
a motor controller (100, 200) according to any one of the preceding claims coupled to the current sensor (219) and the motor driver (218) and configured to receive current sensor signals (102) from the current sensor (219) and to provide control signal (104) to the motor driver (218).

9. Method for controlling an electric motor (217), the method comprising:

generating (S1) control signals (104) for electrical phases of the electric motor (217) based on a predefined maximum starting current (106) for a first set of control signals (104) in a group comprising a plurality of sets of control signals (104);

sensing (S2) current values (107) in the motor phases during the generation of the first set of control signals (104); and

generating (S3) the control signals (104) for further sets of control signals (104) in the group based on a starting current that is determined based on the measured current values (107).

10. Method according to claim 9, wherein for generating the control signals (104) an open-loop control is performed during a start-up phase of each set and a closed-loop control is performed during a running phase of each set.

11. Method according to claim 10, wherein generating the control signals (104) for the first set of the group comprises:

generating the control signals (104) for the start-up phase based on the predefined maximum starting current (106);

generating the control signals (104) for the running phase based on the current values (107) received for the motor phases during the running phase; and

determining a maximum current value (107) of the phase currents during the running phase.

12. Method according to claim 11, wherein generating the control signals (104) for the further sets comprises:

generating the control signals (104) for the start-up phase based on the determined maximum current value (107) and a predetermined acceleration current;

generating the control signals (104) for the running phase based on the current values (107) measured for the motor phases during the running phase.

13. Method according to claim 12, wherein the sum of the maximum current value (107) and the predetermined acceleration current is lower than the maximum starting current (106).

14. Method according to any one claims 12 and 13, wherein while generating the control signals (104) for the further sets, the maximum current value (107) is measured while generating the control signals (104) for the running phase.

15. Method according to any one of the preceding claims 12 to 14, wherein generating the control signals (104) for the further sets comprises:

monitoring based on the sensed current values (107), if after generating the control signals (104) for the start-up phase the electric motor (217) is rotating; and

if the electric motor (217) is not rotating after generating the control signals (104) for the start-up phase, restarting generating the respective set of control signals (104) and generating the control signals (104) for the start-up phase based on the predefined maximum starting current (106) and determining again the maximum current value (107) of the phase currents during the running phase.

Fig. 1

Fig. 2

Fig. 3

Fig. 4

Europäisches
Patentamt

European
Patent Office

Office européen
des brevets

# EUROPEAN SEARCH REPORT

**Application Number**

EP 21 16 8670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 044 314 B1 (YEN LIN-HAN [TW]) 7 August 2018 (2018-08-07) | 1-6,9-14 | INV. H02P6/21 |
| Y | * columns 14-15 * <br> * claims 1-11 * <br> * figures 9,10 * <br> ----- | 7,8,15 | H02P6/182 <br> H02P1/04 <br> H02P1/46 |
| Y | US 2006/193090 A1 (HO EDDY Y Y [US]) 31 August 2006 (2006-08-31) * paragraph [0011] * ----- | 7,15 | |
| Y | US 2016/115632 A1 (JUNG HWANJIN [KR] ET AL) 28 April 2016 (2016-04-28) * paragraphs [0003], [0047], [0050] * ----- | 8 | |

**TECHNICAL FIELDS SEARCHED (IPC)**

H02P

The present search report has been drawn up for all claims

| Place of search | Date of completion of the search | Examiner |
|---|---|---|
| Munich | 10 September 2021 | Vanata, Daniela |

EPO FORM 1503 03.82 (P04C01)

## ANNEX TO THE EUROPEAN SEARCH REPORT
## ON EUROPEAN PATENT APPLICATION NO.

EP 21 16 8670

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | | Publication date | Patent family member(s) | | Publication date |
|---|---|---|---|---|---|
| US 10044314 | B1 | 07-08-2018 | CN | 108418352 A | 17-08-2018 |
| | | | DE | 202018104131 U1 | 09-08-2018 |
| | | | TW | 201909546 A | 01-03-2019 |
| | | | US | 10044314 B1 | 07-08-2018 |
| US 2006193090 | A1 | 31-08-2006 | CN | 1829068 A | 06-09-2006 |
| | | | DE | 102006008497 A1 | 31-08-2006 |
| | | | JP | 2006238692 A | 07-09-2006 |
| | | | US | 2006193090 A1 | 31-08-2006 |
| US 2016115632 | A1 | 28-04-2016 | CN | 107109762 A | 29-08-2017 |
| | | | EP | 3214218 A1 | 06-09-2017 |
| | | | KR | 20160049367 A | 09-05-2016 |
| | | | US | 2016115632 A1 | 28-04-2016 |
| | | | WO | 2016068575 A1 | 06-05-2016 |

EPO FORM P0459

For more details about this annex : see Official Journal of the European Patent Office, No. 12/82